# EUROPEAN PATENT APPLICATION

(11) **EP 3 573 305 A1**
(43) Date of publication of application: **27.11.2019**
(21) Application number: 18173844.4
(22) Date of filing: 23.05.2018
(51) Int. Cl.: H04L 29/06, H04L 9/32, G06K 19/077, G07F 7/08, H04W 12/04, H04L 9/08

(54) **AUTHENTICATING AN ENTITY**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A method of authenticating an entity (800) comprises generating, at a one-time pad authenticator (10, 100) associated with a user, a first code (70) corresponding to a first part of a first one-time pad (200) stored on the one-time pad authenticator, the first point having a starting address (S) within the first-one time pad. The method comprises transmitting, from a user device (900) to the entity, a request for the entity to authenticate itself, the request comprising the starting address. In response to receiving the request, the method comprises generating, by the entity, a second code corresponding to the first part of a second one-time pad stored on the entity, wherein the first part of the second one-time pad is determined using the received starting address. The method further comprises transmitting the second code to the user device; and receiving, at the user device, the second code for comparison with the first code, wherein, if the first code is equal to the second code, the entity is authenticated. The present invention also provides an entity, a user device and a system for performing elements of the method.

## Description

### FIELD OF THE INVENTION

This invention relates to an entity, user device and a system and method for authenticating the entity.

### BACKGROUND ART

Various tools currently exist for authenticating a user to a server or terminal, such as a server running a website for banking or working remotely. For example, RSA SecurID® use a secret key that is hardcoded into the device and known to a central server. The secret key K and another factor T (usually a timestamp derived from the time at which a request for an authentication code occurs, and/or a counter that increments each time a code is requested) are passed as inputs to an algorithm that generates a long length output F(K,T). The output F is used to generate a variable length (typically 6-8 digit) hash that the remote user transmits to the server to authenticate his or her self. The server will use the same key, factor and algorithm in generating its own hash and, if the hash it generates matches the hash received from the users, the user is authenticated.

However, there still exists a danger that the server/terminal itself could be spoofed. To counter this, some websites will suggest the user checks the Unique Reference Locator (URL). This is laborious for the user, and is still vulnerable to a Domain Name Server Spoofing attack. When setting up an account with a server running a particular website, some servers will ask a user to select a picture or phrase for display whenever they access their account so that they know the website they are accessing is genuine. However, even here it is possible to gain this information by compromising the user's machine or by cracking the user's password for the server account. The malicious actor may then set up a spoof website that shows the picture of phrase that the user selected to demonstrate a website as genuine.

It would be advantageous to provide an entity, such as a server, and method for authenticating the entity in which at least some of the aforementioned disadvantages are eliminated or at least reduced.

### SUMMARY

According to a first aspect of the present invention, there is provided a method of authenticating an entity, comprising:
generating, at a one-time pad authenticator associated with a user, a first code corresponding to a first part of a first one-time pad stored on the one-time pad authenticator, the first part starting at a starting address within the first-one time pad;
transmitting, from a user device to the entity, a request for the entity to authenticate itself, the request comprising the starting address;
in response to receiving the request, generating, by the entity, a second code corresponding to the first part of a second one-time pad stored on the entity, wherein the first part of the second one-time pad is determined using the received starting address;
transmitting the second code to the user device; and
receiving, at the user device, the second code for comparison with the first code,
wherein, if the first code is equal to the second code, the entity is authenticated.

Advantageously, the present invention tends to provide a means for an entity, such as a web server, to authenticate itself to a user or their personal device. The signalling architecture tends to further provide an optional means for the user to be authenticated to the entity in response to the entity being authenticated.

The method may comprise comparing, by the user device, the first code and second code. The user device may comprise the one-time pad authenticator. Alternatively, the method may comprise displaying at least the second code on the user device.

The first code and second code may be of the same length. Transmitting the request may comprise transmitting an indicator of length of a sequence of bits used to generate the first code. The first code may comprise the indicator of length of a sequence of bits and the request may comprise the first code. Generating the second code may comprise using the received indicator of length of the sequence of bits. Alternatively, generating the second code may comprise determining the length of the first code and using the length of the first code to generate the second code. Alternatively again, the entity may be pre-programmed with a length of a sequence of bits to be used to generate the second code such that it is the same length as the first code.

The first code may comprise the starting address, and transmitting the request may comprise transmitting the first code.

Generating the first code may comprise:
forming a key from a plurality of bits from the first one-time pad; and
using the key to generate the first code by one of:
   using the key in a hash; applying a logical operation to the key and a plurality of bits from the first one-time pad, the plurality of bits not forming the key; or forming the first code directly from the key, and
wherein generating the second code may comprise:
forming a key from a plurality of bits from the second one-time pad; and
using the key to generate the second code by one of:
   using the key in a hash; applying a logical operation to the key and a plurality of bits from the second one-time pad, the plurality of bits not forming the key; or forming the second code directly from the key.

The entity may comprise a plurality of second one-time pads, each associated with a separate user, wherein the step of requesting the entity to authenticate itself may comprise transmitting user credentials to the entity, and wherein the method may further comprise:
selecting, by the entity, the second one-time pad associated with the user based on the user credentials and using the selected one-time pad to generate the second code. The first code and second code may further be based on the user credentials.

The method may comprise transmitting the first code to the entity such that the user can be authenticated by the entity.

According to a second aspect of the present invention, there is provided a method of authenticating an entity, comprising:
receiving, from a user device, a request for the entity to authenticate itself, the request comprising a starting address of a one-time pad;
generating a first code corresponding to a first part of a one-time pad stored on the entity, the first part being determined by the received starting address; and
transmitting the first code to the user device.

Generating the first code may comprise using a predetermined length of a bit sequence within the one-time pad. Alternatively, the entity may receive an indicator of length of a sequence of bits of the one-time pad, and generating the first code may comprise using the received indicator.

The method may comprise:
receiving user credentials;
selecting from a plurality of stored one-time pads a one-time pad corresponding to the user credentials; and
using the selected one-time pad to generate the first code.

The method may further comprise receiving a second code from the user device for authenticating the user.

According to a third aspect of the present invention, there is provided an entity comprising:
a storage means for storing at least one one-time pad;
a receiver arranged to receive a request from a user device for the entity to authenticate itself, the request comprising a starting address of a one-time pad;
a processor arranged to, in response to receiving the request, generate a first code based on a first part of one of the at least one one-time pads, wherein the first part is determined using the received starting address; and
a transmitter arranged to transmit the first code to the user device.

The entity may be a server for providing a website for display on a user device.

The receiver may be arranged to receive user credentials, and the processor may be arranged to generate the first code based on the one-time pad associated with the received user credentials.

The receiver may be arranged to receive a second code from the user device and the processor may be arranged to authenticate the user of the user device using the second code and the at least one one-time pad.

According to a fourth aspect of the present invention, there is provided a user device comprising:
a transmitter configured to transmit a request for an entity to authenticate itself, the request comprising a starting address of a one-time pad used for generating a first code; and
a receiver arranged to receive a second code from the entity, wherein, if the first code is equal to the second code, the entity is authenticated.

The user device may further comprise:
a processor configured to compare the first code with the second code to authenticate the entity.

The user device may comprise a user input for receiving the starting address and/or the first code from a user.

The user device may comprise a one-time pad authenticator arranged to store a one-time pad, wherein the one-time pad authenticator is configured to generate the first code based on a first part of the one-time pad, the first part starting at the starting address.

The user device may be a mobile phone. Alternatively, the user device may be a credit card or other payment instrument. The user device may be a smart card.

According to a fifth aspect of the present invention, there is provided a system for authenticating an entity, comprising:
the entity according to the third aspect;
a one-time pad authenticator associated with a user, the one-time pad arranged to store a one-time pad and to generate a code based on a first part of the one-time pad, the first part starting at a starting address of the one-time pad; and
a user device according to the fourth aspect.

It will be appreciated that features described in relation to one aspect of the present invention can be incorporated into other aspects of the present invention. For example, an apparatus of the invention can incorporate any of the features described in this disclosure with reference to a method, and vice versa. Moreover, additional embodiments and aspects will be apparent from the following description, drawings, and claims. As can be appreciated from the foregoing and following description, each and every feature described herein, and each and every combination of two or more of such features, and each and every combination of one or more values defining a range, are included within the present disclosure provided that the features included in such a combination are not mutually inconsistent. In addition, any feature or combination of features or any value(s) defining a range may be specifically excluded from any embodiment of the present disclosure.

### BRIEF DESCRIPTION OF THE DRAWINGS

Embodiments of the invention will now be described by way of example only and with reference to the accompanying drawings.
FIG. 1 is a schematic drawing of a first example remote authenticator.
FIG. 2 is a schematic drawing of a second example remote authenticator.
FIG. 3 is a portion of an example one-time pad for use in the remote authenticators of Fig. 1 or Fig. 2.
FIG. 4 is a schematic flow diagram showing steps in an example method of generating an authentication code.
FIG. 5 is a schematic drawing of an arrangement of shift registers used in an example of an authentication device.
FIG. 6 is a block diagram showing operations of a processor used with the shift register arrangement of Fig. 5.
FIG. 7 is a flow chart showing steps in an example method of operating the apparatus of Figs. 5 and 6.
FIG. 8 is a block diagram illustrating a system for authenticating a server according to the invention.
FIG. 9 is a schematic block diagram of an authentication architecture according to an embodiment of the invention.

For convenience and economy, the same reference numerals are used in different figures to label identical or similar elements.

### DETAILED DESCRIPTION

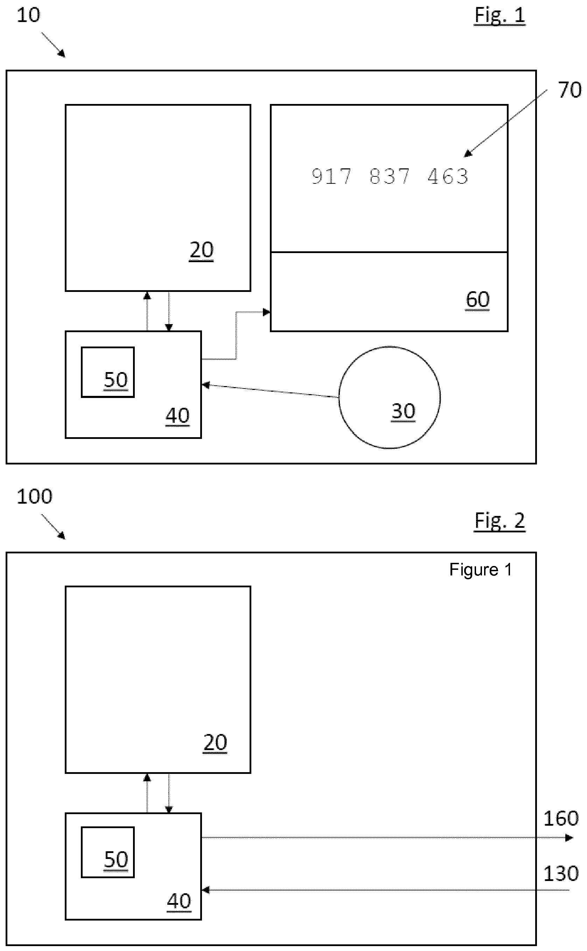

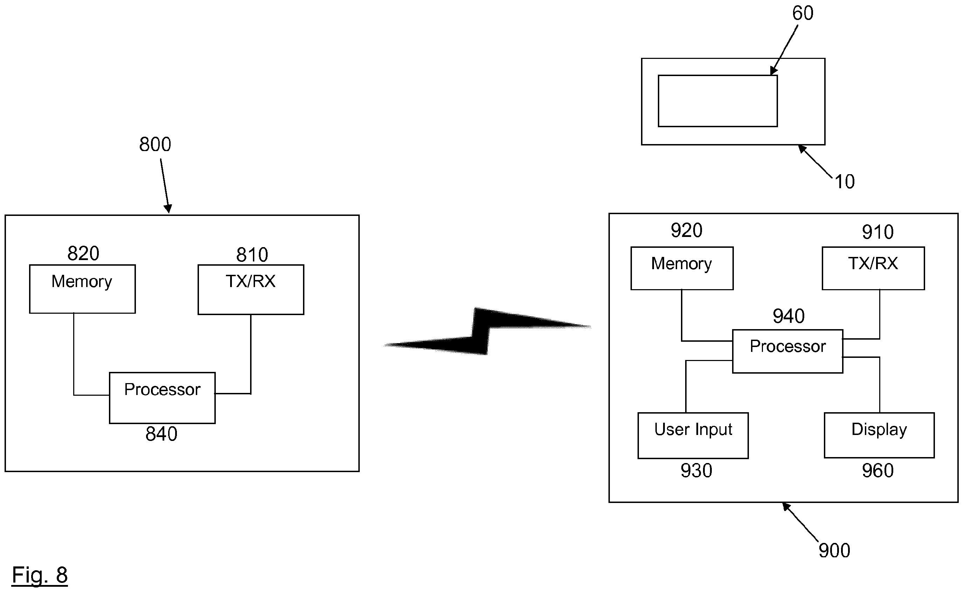

Embodiments are described herein in the context of approaches to improve methods of authenticating an entity, such as a server operating a website, an ATM or a Point of Sale terminal. The improved method makes use of a one-time pad authenticator, which will be described below with reference to Figures 1 to 7. Figures 8 to 10 describe aspects of the present invention. Those of ordinary skill in the art will realize that the following detailed description is illustrative only and is not intended to be in any way limiting. Other embodiments of the present invention will readily suggest themselves to such skilled persons having the benefit of this disclosure.

As set out above, the present invention tends to make use of remote authentication. There are a number of ways in which this can be performed, and three examples are as follows. In a first example, a key is formed from a plurality of bits from a one-time pad. The key is used to generate an authentication code. An authentication code is received. The authentication is performed by comparing the generated authentication code with the received authentication code. The steps of the method are repeated a plurality of times, each time using a different plurality of bits from the one-time pad.

In a second example, again a key is formed from a plurality of bits from a one-time pad. The key is used to generate an authentication code. The authentication code is transmitted. The steps of the method are repeated a plurality of times, each time using a different plurality of bits from the one-time pad.

In a third example, a user forms a key from a plurality of bits from a one-time pad. The user uses the key to generate a first authentication code. The user transmits the first authentication code to a server remote from the user. The server forms a key from a plurality of bits from a one-time pad identical to the one-time pad used by the user. The server uses the key to generate a second authentication code. The server receives the first authentication code from the user. The server performs the authentication by comparing the second authentication code with the first authentication code. The user and the server repeat the steps of the method a plurality of times, each time using a different plurality of bits from the one-time pads.

The authentication code may be transmitted to a server.

The authentication code may be transmitted in plaintext.

Unlike use of asymmetric keys in present methods of remote authentication, use of an OTP is intrinsically resistant to breaking by quantum computers. Also unlike many present methods of remote authentication, independent synchronisation of clocks or counters, between the user and the remote server is not necessary: a starting point in the OTP can be transmitted in plaintext with the authentication code.

Furthermore, in contrast to other methods, the presently described method is less vulnerable to malware on a remote computer with which the user is interacting.

The key may be used in a hash to generate the authentication code.

The authentication code may be generated by applying a logical operation, for example a XOR, to the key and a plurality of bits, from the OTP, not forming the key.

The authentication code may be formed directly from the key, for example the key may be the authentication code.

The method may include, subsequent to generating the authentication code, the steps of forming a key from a plurality of bits (different from those used to form the authentication code) from the one-time pad and using the key to encrypt a message.

An example of a remote authenticator is set out below. A memory in the device includes a one-time pad comprising a series of bits. Circuitry in the device is arranged to: retrieve a plurality of the bits from the one-time pad; form a key from the plurality of bits, use the key to generate an authentication code; and repeat those steps a plurality of times using a different plurality of bits from the one-time pad.

The circuitry may be arranged to transmit the authentication code. The circuitry may be arranged to receive an authentication code and to perform an authentication by comparing the generated authentication code with the received authentication code.

The circuitry may include a microprocessor.

The one-time pad will include sufficient bits to form a plurality of different keys. The one-time pad may be very much larger, for example one or more orders of magnitude larger, than the 1024 and 2048 bit keys used in present remote authenticators. Thus, the one-time pad may include more than 1 megabit of data. For example, the one-time pad may include more than 100 megabits, more than 1 gigabit, more than 500 gigabit, more than 1 terabit or even more than 100 terabits of data for forming the keys; thus, preferably, a very large number of keys can be formed from the bits stored in the one-time pad.

The bits used to form the key may be deleted automatically from the one-time pad. The automatic deleting may be done before transmission of the authentication code. The automatic deleting may be done after transmission of the authentication code. The automatic deletion may be done immediately after each bit of the key is retrieved from the one-time pad.

The one-time pad may be loaded into a serial shift register. The bits forming the key may be shifted from the serial shift register. The bits left vacant by the shifting may be populated with zeros, ones or a random or pseudo-random sequence of zeros and ones. Thus the bits forming the key may be removed from the serial shift register and replaced in the serial shift register by the zeros, ones or sequence of zeros and ones.

The number of bits retrieved to form the keys may be the same for each iteration of the method, i.e. each key formed may be of the same length. Alternatively, different length keys may be formed in different iterations. The key length may be transmitted, as part of or in addition to the authentication code. The key length may be selected by a pseudo-random algorithm.

The plurality of bits used to form the key may be retrieved from a contiguous portion of the one-time pad, i.e. they may be stored together in sequence in the one-time pad.

The method may include recording (for example in a register) a current starting address in the one-time pad, from which the plurality of bits are retrieved, and then updating the current starting address to be the bit next following the retrieved bits in the one-time pad.

The starting address may be transmitted, as part of or in addition to the authentication code and/or key length (if transmitted).

The receiver of the authentication code may also therefore receive the starting address and/or key length, for use in retrieving the correct plurality of the bits from the one-time pad.

The authentication code may be transmitted by a user or device to a server for authentication of the user or device. The one-time pad may be provided in a module in the server and the remote authenticator may be authenticated with the server before activation of the OTP module. That will help to ensure that the OTP is matched to the correct user/device. According to the present invention, this is optionally performed after the server has been authenticated to the user.

If a user is being authenticated, the authentication code may be presented to the user on a display. The user can then input the authorisation code into a website, app or other interface to authenticate themselves. Where appropriate, the starting address and/or the key length is also presented to the user on the display.

The remote authenticator may be protected by a personal identification number PIN, which may be unique to each user. The remote authenticator may be configured to delete the one-time pad from memory if the PIN is incorrectly input a preselected number of times.

If a device is being authenticated, the starting point, key length and hash may be generated automatically when the device receives a query across a network connection.

The memory including the one-time pad may be, for example, an Electrically Erasable Programmable Read Only Memory (EEPROM).

A first example (Fig. 1) is an example remote authenticator 10, for authentication of a person. The device 10 includes an EEPROM 20, an activation button 30, a microprocessor 40 including a register 50, and a display 60. The EEPROM 20 stores a one-time pad. When a user wishes to initiate authentication, for example in response to a prompt from a website, the user presses the button 30. This causes the processor 40 to retrieve a start position from the register 50 and to generate a random length (between a minimum and a maximum length). The processor 40 then retrieves from the one-time pad in the EEPROM 20 the sequence of bits of the generated length that starts at the start position. The processor 40 hashes the retrieved sequence of bits to produce a sequence of numbers. The processor 40 concatenates the start position, length and sequence of numbers and sends the resulting sequence to a display 60, where it is displayed as an authentication code 70.

The start position points to the first bit in a sequence of bits in a one-time pad used to generate a particular authentication code. The first bit in the sequence may be any predetermined position within the one-time pad. For example, the start position may be in the middle of the one-time pad. Here, as keys are generated and the one-time pad used up, eventually the processor 40 reaches the end of the one-time pad and then starts reading from the beginning until the middle is reached again. In another embodiment, the start position is the first bit of the one-time pad.

The processor then deletes (e.g. by overwriting) the retrieved bits from the one-time pad. A one-time pad is more secure against subsequent capture if the key is deleted as it is used. Technologies such as Electrically Erasable Programmable Read Only Memory (EEPROM) can be used to store the OTP. The deletion mechanism will control the OTP device so it removes the bits used after or as they are retrieved. An example of an implementation would be a serial shift register, in which the bits are shifted based on the pulses the shift register receives. Once shifted the new bits are populated by 0s.

The processor 40 then stores the new start position (i.e. the address of the next bit following the now-deleted bits in the one-time pad) in the register 50.

The user reads the authentication code from the display 60 and provides it to an authenticating server (not shown). The transmission of the start bit and key length ensures that the remote device 10 and the server are always synchronised (lack of synchronisation is one of the main problems with current remote authenticators).

The starting address (i.e. location) and length of the sequence of bits in the OTP used to generate the authentication code is not a secret and can therefore be sent in the clear to allow synchronisation. The authenticating server extracts the start positions and length from the authentication code 70 and retrieves from its own identical copy of the one-time pad the sequence of bits having that length that starts at the start position. The processor 40 hashes the retrieved sequence using the same hash as the device 10 used and thereby obtains the same sequence of numbers as are in the authentication code 70. This authenticates the user. Further details will follow with reference to Figures 8 to 11 regarding how the authenticating server authenticates itself to the user and/or their device.

A second example (Fig. 2) is a second remote authenticator 100, for authentication of a user device (not shown), with which the authentication device 100 is associated. In this example, the operation of the authentication device 100 of Fig. 2 is substantially identical to that of the authentication device 10 of Fig. 1, save that the authentication process is started by an activation signal 130 sent over a network connection by a remote server (not shown), instead of being started by a user pressing the button 30, and the authentication code is sent as an output signal 160 over the network connection to the server.

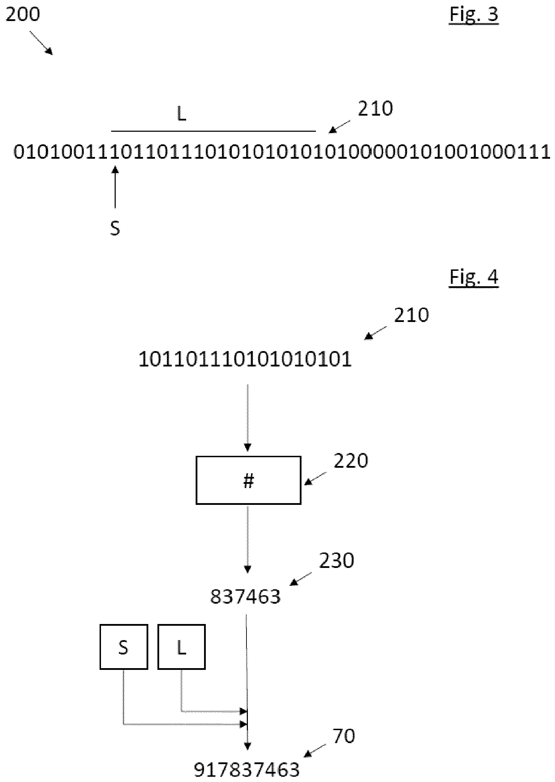

Generation of the authentication code is illustrated in schematic form in Figs. 3 and 4. The EEPROM 20 stores the one-time pad 200 as a sequence of 1s and 0s. The register 50 stores a starting address S and the processor 40 generates a random length L (Figs. 3 and 4 show the length L as being only 18 bits, for ease of illustration, but in general it will be much longer). The processor 40 retrieves the bits 210 from the one-time pad that start at the starting address S and extend for the length L. As shown in Fig. 4, the retrieved bits 210 are subjected to a hash 220 that results in a sequence 230 of numbers. The starting address S and length L are concatenated with the sequence 230 of numbers to produce the authentication code 70.

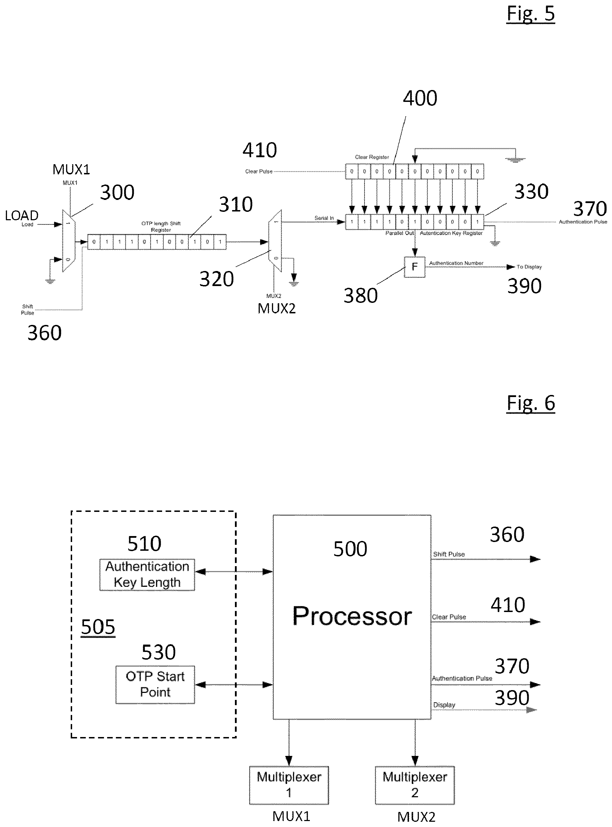

Fig. 5 shows how three shift registers 310, 330, 400 can be used in an example implementation of the invention. A first multiplexer 300 is connected (high input 1) to a load, ground (low input 0) and to an OTP shift register 310 Although, for ease of illustration, OTP shift register 310 is shown in Fig. 5 as having only 11 bits, in reality it will be very much larger, as it contains the bits of the OTP. The shift registers 310, 330, 400 may be implemented as a single (large) register or as a plurality of smaller shift registers connected in series. The OTP shift register 310 is connected to a second multiplexer 320, which is connected as a demultiplexer, with a low output 0 connected to ground and a high output 1 connected to an authentication key register 330. Each bit of the authentication key register 330 is connected to receive bits from a clear register 400, which is populated with 0s (i.e. connected to ground).

The load includes a source of random numbers, which are passed into the OTP shift register 310 when the first multiplexer 300 is switched high by a signal MUX1. The second multiplexer 320 is enabled or disabled by a signal MUX2; when the signal MUX2 switches the second multiplexer 320 low "0", the second multiplexer 320 is connected to ground, and when the signal MUX2 switches the second multiplexer 320 high "1", bits can flow from the OTP shift register 310 to the authentication key register 330. The bits of the authentication key register 330 are set to "0" when a clear pulse 410 is sent to the clear register 400. The bits of the authentication key register 330 are used to generate an authentication number in a hash function module 380 when an authentication pulse 370 is sent to the authentication key register. The authentication number is sent to a display 390 so that the user can read it and transmit it to an authentication server (not shown).

The operation of the shift registers 310, 330, 400 is controlled by a processor 500 (Fig. 6). The processor 500 is connected to a memory 505 storing an authentication key length value 510 and an OTP starting address value 530. The processor is connected to generate the enable/disable signals MUX1 and MUX2. The processor 500 is also arranged to generate the shift pulse 360, clear pulse 410 and authentication pulse 370, and to send to the display 390 the authentication number, authentication key length 510, and OTP starting address value 530.

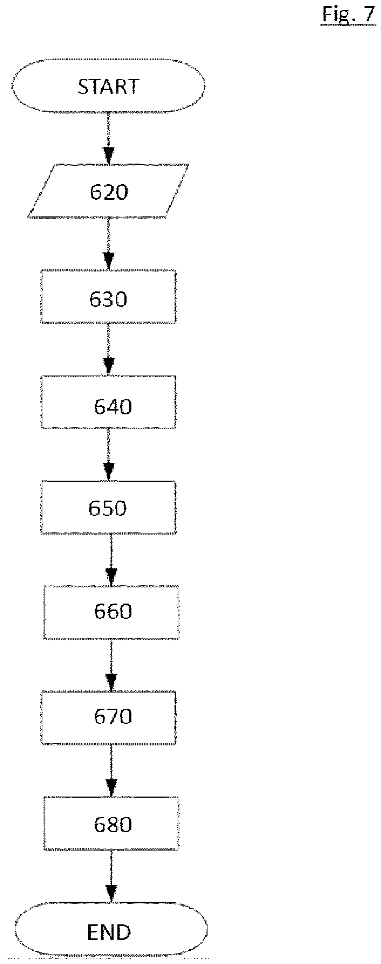

In an example method of remote authentication (Fig. 7), the processor 500 receives (step 620) a request for an authentication code 380. The processor sets (step 630) MUX2 to 1 and reads (step 640) the authentication key length value 510 from memory. The processor 500 sends (step 650) a number of shift pulses 360 to the OTP shift register 310, the number being equal to the authentication key length value 510. That shifts that number of bits from the OTP shift register 310 to the authentication key register 330. The processor 500 then sends (step 660) an authentication pulse 370 to the authentication key register 330. All of the bits stored in the authentication key register are released in parallel to the hash function module 380, where they are used to generate the authentication number (in a manner well known in the art). The processor 500 sends the authentication number to the display 390, together with the authentication key length value 510. The processor 500 also sends (step 670) the OTP starting address value 530. The processor 500 then uses the starting address value 530 and the authentication key length value 510 to calculate a new starting address value 530, which the processor writes to the memory (680).

In examples where the device deletes the bits after (or as) they have been used, the risk of the reliability of the authentication process being compromised by capture of the device is reduced. Deleting the bits also protects against hardware errors that may cause erroneous reuse of bits.

In some examples, a personal pin is used to authenticate the device to a user or additional device, thus preventing a captured device from being used. Normal security procedures can be implemented such as device wipe after a number of incorrect inputs.

Although in the device-authenticating example of Fig. 2 the starting point, pseudo key length and hash are generated in the same way as in the person-authenticating example of Fig. 1, in alternative embodiments, an automated process can be used to generate them when queried to do so. In an example implementation, each time a request for an authentication key occurs using the OTP module, the start bit of the OTP will increase. The starting point is stored in a register and the increment will be the same as the bit length chosen for the authentication key. In the OTP Module, the processor can read and write to the starting address value 530. As the key length is customisable the range of bits used will differ so the increment will have to match the key length used. A default value will be loaded that will increment by that amount however this can be modified.

The above examples use short sequence lengths for ease of explanation and illustration; however, it will be appreciated that embodiments of the invention will typically employ OTPs and authentication codes that are very much longer.

The present invention will now be described with reference to Fig. 8. Here, a server 800, for example the authentication server previously described, is required to authenticate itself to a user or user device 900. In the embodiment shown in Fig. 8, the user of the user device 900 is associated with a separate one-time pad remote authenticator 10. Here, the remote authenticator 10 is of the type described with reference to Fig. 1. In other words, the one-time pad authenticator 10 in the system shown in Fig. 8 includes at least a display 60 for showing an authentication code to the user. In alternative embodiments, the user device 900 includes the functionality of the remote authenticator 100 described with reference to Fig. 2.

The user device 900 according to the embodiment shown in Fig. 8 is for example a mobile phone. The user device 900 may also be a computer terminal. In an exemplary embodiment, the server 800 is a server that operates a website, and the user device 900 is a device for accessing that website. The user device 900 may alternatively be a credit card or other payment device or smart card. The server 800 may be provided with a terminal (for example a Point of Sale terminal, or credit card reader) which the user accesses using their user device 900 (e.g. credit card, or mobile phone). The server 800 may be an enterprise server for a place of work, and the user device 900 may be a laptop. Here, the user uses their user device 900 for remote working, i.e. to access the server of their place of work remotely.

It would be readily appreciated that where the user device 900 includes the one-time pad, the user device 900 should have an appropriate level of encryption and security to ensure the one-time pad is not compromised. This may include fingerprint or iris recognition, or a password. The skilled person would be aware of appropriate security methods. Instead of a server 800, the present invention may be used to authenticate a non-networked entity.

The server 800 includes a memory 820 for storing a one-time pad. In some embodiments, the memory 820 stores one one-time pad for each user (i.e. one OTP per user) associated with the server 800. For example, the server 800 is a bank's server, and the memory 820 stores a one-time pad for each account holder that has registered for internet banking. The memory 820, in addition for storing software and an operating system used by a processor 850 to cause the entity to perform its standard functions, functions substantially the same as the memory 20 described with reference to Fig. 1. For example, the memory 820 is an EEPROM.

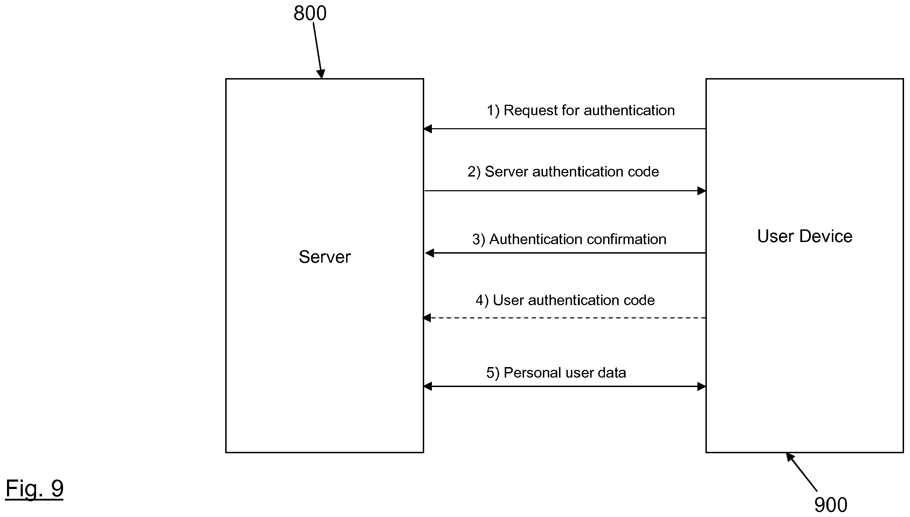

The processor 840 is for example a microprocessor, controller or microcontroller. Operations of the processor 840 will be described in more detail with reference to Fig. 9. However, generally the processor 840 performs similarly to the processor 40 described with reference to Fig. 1.

The server 800 includes a transceiver 810. The transceiver 810 may be a single element configured to perform the functions of a transmitter and a receiver. Alternatively, the transceiver 810 may comprise two separate elements. The transceiver 810 may be a wired or wireless transceiver. For example, the transceiver 810 may operate according to a WiFi, Bluetooth TM or 4G communications standard. The transceiver 810 provides communication with a network, for example the Internet, intranet or other wide or local area network. In the example of the bank, the server 800 communicates with the user device 900 via the internet.

The user device 900 includes a memory 920 for storing a one-time pad. The memory 920 is substantially the same as the memory 20 described with reference to Fig. 1.

The user device 900 includes a user input 930. The user input 930 is for example a touchscreen module, keyboard or mouse. The user input 930 is used by the user to access the server 800 remotely, for example via a website.

In some embodiments, the proximity of the user device 900 to a terminal, such as a credit card payment device, is used to automatically access the server 800. In other words, the user input 930 may not be a necessary feature. Further, according to the embodiment shown in Fig.8, the user input 930 is also used to receive the authentication code as displayed on the display 60 of the remote authenticator 10. In embodiments where the functionality of the remote authenticator 10 is embedded within the user device 900, the user input 930 may not be a necessary feature.

The display 960 of the user device 900 may be an OLED, AMOLED, LED or LCD. The display 960 may be a touchscreen, having the features of the user input 930. The display 960 is used, for example, to view a website provided by the server 800. In some embodiments, the display 960 is used to display an indication of whether the server 800 is authentic. Instead of a display 960, the user device 900 may be provided with an audio device, vibrator, or light to indicate whether or not the server 800 is authentic. In other words, the display 960 is not essential in some embodiments, which will be described in more detail later.

The processor 940 is for example a microprocessor, controller or microcontroller. Operations of the processor 940 will be described in more detail with reference to Fig. 9.

The user device 900 includes a transceiver 910. The transceiver 910 may be a single element configured to perform the functions of a transmitter and a receiver. Alternatively, the transceiver 910 may comprise two separate elements. The transceiver 910 may be a wired or wireless transceiver. For example, the transceiver 910 may operate according to a WiFi, Bluetooth TM or 4G communications standard. The transceiver 910 provides communication with a network, for example the Internet, intranet or other wide or local area network, such that the user device 900 can access the server 800.

The user device 900 may comprise a data communication port, such as a USB (universal serial bus) port or Ethernet port. The remote authenticator 10 (or 100) may further include a corresponding connector for interfacing with the data communication port. In other words, in some embodiments, the remote authenticator 10 (or 100) can be plugged in to the user device 900 in order to transfer information to the user device 900. This information may include a starting address and an authentication code generated using the starting address. This is particularly advantageous where the one-time pad authenticator 100 does not include a display 60.

Examples of system architectures will now be described with reference to Fig. 9. This Figure shows the steps of using a one-time pad remote authenticator 10 as described above with reference to Figures 1 to 7 to perform a handshake between the user device 900 and the server 800 to authenticate both parties to each other.

For clarity, the one-time pad remote authenticator 10 associated with the user is not shown in Fig. 9. However, various implementations of systems where the one-time pad remote authenticator 10 is provided within the user device 900 and separate from the user device 900 (as in Fig. 8) will be described. The one-time pad remote authenticator 10 may be arranged to be electrically coupled to the user device 900 such that it can transfer data to the user device 900.

In a first step, the user device 900 transmits a request for authentication to the server 800. The request includes at least a starting address S, indicating a position in a one-time pad from which to begin reading bits to generate an authentication code. The starting address S is the starting address S used by a one-time pad authenticator 10 to generate a first authentication code to authenticate the user to the server 800 (i.e. a user authentication code). In other words, the starting address S is a form of pointer rather than an actual value. The request may alternatively or additionally include the user authentication code. At least in embodiments where the user authentication code is transmitted as part of the request, the authentication code includes the starting address S. This is explained in more detail with reference to Fig. 4.

The request, including the starting address S, can be transmitted in plain text as it provides little benefits to an eavesdropper if it is intercepted. The starting address S allows the one-time pad authenticator 10 to be synchronised with the server 800 such that the server 800 is able to generate an authentication code using the same part of its one-time pad as the one-time pad authenticator 10 used to generate an authentication code from its one-time pad.

The user may read the starting address and/or user authentication code from the display 60 of the one-time pad authenticator 10 and use a user input 930 on the user device 900 to enter the starting address S and/or user authentication code into the user device 900 for transmission to the server 800. Alternatively, the one-time pad authenticator 10 (or 100) may be embedded within the user device 900 or may be electronically coupled to the user device 900 such that the starting address S and/or user authentication code can be received automatically by the user device 900. In further embodiments, the user device 900 and one-time pad authenticator 10 (or 100) are in wireless communication such that the user device 900 can receive the starting address S and/or the user authentication code.

The request for authentication may take the form of a single message, or data packet. Alternatively, the request for authentication may take the form of a plurality of messages, or data packets. In other words, a request may include a message indicating an identifier of the user device and an indication that an authentication handshake is sought, and another message including the starting address S.

In one embodiment, the memory 820 of the server 800 stores a single one-time pad. This is the same one-time pad provided to each one-time pad authenticator 10.

The request for authentication may include an indicator of the length of the sequence of bits used to generate the user authentication code. This indicator may be embedded in the user authentication code where the user authentication is transmitted as part of the request. This is explained in more detail with reference to Fig. 4. Alternatively, the processor 840 may measure the length of the received user authentication code and use this length to determine the number of bits required to generate a server authentication code of the same length. Alternatively again, the server 800 may be pre-programmed with a length of sequence of bits to use in generating the server authentication code. Here, the one-time pad authenticator 10 (or 100) is pre-programmed with the same length in order to generate the user authentication code.

In another embodiment, the memory 820 of the server 800 stores a plurality of one-time pads. Here, each one-time pad is unique to a user holding an account with the server 800. The request for authentication also includes user credentials. For example, in addition to the starting address S, the request includes a username and password for identifying the user. The server 800 then uses the received credentials to identify and select the appropriate one-time pad from which to generate the server authentication code. This reduces the likelihood of the server's one-time pad being eroded too quickly, for example by unneeded requests by user devices 900.

In the second step, the server 800 uses the starting address S to identify a starting address value 530 within a one-time pad stored on the memory of the server 800. Using this starting address S and a known length of a sequence of bits (either pre-programmed or transmitted as part of the request), the processor 840 of the server 800 generates an authentication code. The server authentication code is generated using the steps described with reference to Fig. 7.

The server 800 then transmits the server authentication code to the user device 900. In some embodiments, where the user device 900 is arranged to receive the user authentication code from the one-time pad authenticator 10 (or 100), the processor 940 of the user device 900 is configured to compare the received server authentication code with the user authenticator code. If the codes match, then the server 800 is considered to be genuine by the user device 900. The user device 900 may then transmit a confirmation to the server 800 such that server 800 is able to transmit further data to the user device 900. The confirmation may also comprise a request for permission to receive or access further information from the server 800.

Alternatively, if the two codes do not match, it is determined that that the server 800 the user is trying to access is not the genuine server 800. The user can then locate the genuine server 800 address and change their username and password.

The user device 900 may be configured to provide a visual or audio indication of whether or not the server 800 is authentic. For example, if the codes do not match, the display of user device 900 may be configured to display a warning message. Alternatively, the speaker of the user device 900 may be configured to emit a warning beep if the server 800 is not authentic.

In another embodiment, the received server authentication code is displayed on the user device 900 and the user authentication code is displayed on the one-time pad remote authenticator 10. Here, the user visually compares the codes to determine whether the server 800 is authentic.

On receiving the confirmation of server authentication from the user device 900, the server 800 may then request a user authentication code from the user. For example, this may be in an embodiment where the user authentication code did not form part of the initial request for authentication. In one embodiment, the user uses the user input 930 to enter the user authentication code already generated in step 1 into the user device 900 for transmission to the server 800. In another embodiment, the user requests a second user authentication code from the one-time pad remote authenticator 10 (or 100) and transmits the starting address S and second user authentication code. The server 800 will generate a second server authentication code based on the user's starting address S and, in some embodiments, user credentials. The server 800 then compares the received user authenticator code and the new authenticator code is has generated. If the codes match then the user is authenticated. The codes do not match then the user is rejected. In other words, the process of steps 1 and 2 are repeated, but here the server 800 is the entity comparing the codes in order to authenticate the user.

While two-way authentication, whereby the server 800 authenticates itself to the user and the user (or their user device 900) authenticates themselves to the server 800, is described above as an exemplary embodiment, it would be appreciated on reading the disclosure that the authentication may involve only the server 800 authenticating itself to the user (or their user device 900).

Step 5 includes exchanging personal user data between the server 800 and the user device 900 after the handshake is complete in order to provide the user with information, log in to an account, or carry out a financial transaction. These further communications are readily performed by prior art networks, which the present invention seeks to improve.

Using this method, a server 800 tends be authenticated to a user. Additionally, the same one-time pad authenticator 10 (or 100) can be used to authenticate both parties. While the architecture of the signalling is not complex, the process tends to be difficult for a malicious actor to compromise.

While the method has hitherto been discussed authenticating a server 800, the same method can also be used to authenticate any computing device. For example, the method may be used to authenticate a Point of Sale (PoS) terminal prior to a transaction being made to ensure the user is not transmitting funds to a malicious actor. Here, the one-time pad authenticator 10 may be installed in a credit card or the user's mobile phone.

Whilst the accompanying drawings show decimal and binary numbers, it will be appreciated that embodiments of the invention may utilise other numbers, for example hexadecimal numbers, alphanumeric symbols or other data types.

Where, in the foregoing description, integers or elements are mentioned that have known, obvious, or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional do not limit the scope of the independent claims. Moreover, it is to be understood that such optional integers or features, while of possible benefit in some embodiments of the disclosure, may not be desirable, and can therefore be absent, in other embodiments.

## Claims

1. A method of authenticating an entity, comprising:
generating, at a one-time pad authenticator associated with a user, a first code corresponding to a first part of a first one-time pad stored on the one-time pad authenticator, the first part starting at a starting address within the first one-time pad;
transmitting, from a user device to the entity, a request for the entity to authenticate itself, the request comprising the starting address;
in response to receiving the request, generating, by the entity, a second code corresponding to the first part of a second one-time pad stored on the entity, wherein the first part of the second one-time pad is determined using the received starting address;
transmitting the second code to the user device; and
receiving, at the user device, the second code for comparison with the first code,
wherein, if the first code is equal to the second code, the entity is authenticated.

2. The method according to claim 1, comprising comparing, by the user device, the first code and second code.

3. The method according to claim 1 or claim 2, wherein the entity comprises a plurality of second one-time pads, each associated with a separate user,
wherein the step of requesting the entity to authenticate itself comprises transmitting user credentials to the entity, and wherein the method further comprises:
selecting, by the entity, the second one-time pad associated with the user based on the user credentials and using the selected one-time pad to generate the second code.

4. The method according to any one of the preceding claims, comprising transmitting the first code to the entity such that the user can be authenticated by the entity.

5. A method of authenticating an entity, comprising:
receiving, from a user device, a request for the entity to authenticate itself, the request comprising a starting address of a one-time pad;
generating a first code corresponding to a first part of a one-time pad stored on the entity, the first part being determined using the received starting address; and
transmitting the first code to the user device.

6. The method according to claim 6, comprising:
receiving user credentials;
selecting from a plurality of stored one-time pads a one-time pad corresponding to the user credentials; and
using the selected one-time pad to generate the first code.

7. The method according to claim 5 or claim 6, further comprising receiving a second code from the user device for authenticating the user.

8. An entity comprising:
a storage means for storing at least one one-time pad;
a receiver arranged to receive a request from a user device for the entity to authenticate itself, the request comprising a starting address of a one-time pad;
a processor arranged to, in response to receiving the request, generate a first code based on a first part of one of the at least one one-time pads, wherein the first part is determined using the received starting address; and
a transmitter arranged to transmit the first code to the user device.

9. The entity according to claim 8, wherein the entity is a server for providing a website for display on a user device.

10. The entity according to claim 8 or claim 9, wherein the receiver is arranged to receive user credentials, and wherein the processor is arranged to generate the first code based on the one-time pad associated with the received user credentials.

11. The entity according to any one of claims 8 to 10, wherein the receiver is arranged to receive a second code from the user device and wherein the processor is arranged to authenticate the user of the user device using the second code and the at least one one-time pad.

12. A user device comprising:
a transmitter configured to transmit a request for an entity to authenticate itself, the request comprising a starting address of a one-time pad used for generating a first code; and
a receiver arranged to receive a second code from the entity based on the starting address,
wherein, if the first code is equal to the second code, the entity is authenticated.

13. The user device according to claim 12, comprising a processor configured to compare the first code with the second code to authenticate the entity.

14. The user device according to claim 13 or claim 14, comprising a one-time pad authenticator arranged to store a one-time pad, wherein the one-time pad authenticator is configured to generate the first code based on a first part of the one-time pad, the first part starting at the starting address.

15. A system for authenticating an entity, comprising:
the entity according to any one of claims 8 to 11;
a one-time pad authenticator associated with a user, the one-time pad arranged to store a one-time pad and to generate a code based on a first part of the one-time pad, the first part starting at a starting address of the one-time pad;
a user device according to any one of claims 12 to 14.
